Europäisches Patentamt

European Patent Office

Office européen des brevets

(19)

(11) EP 0 565 993 B1

(12) **EUROPÄISCHE PATENTSCHRIFT**

(45) Veröffentlichungstag und Bekanntmachung des Hinweises auf die Patenterteilung:
**10.01.1996 Patentblatt 1996/02**

(51) Int Cl.$^6$: **H01S 3/06**, H01S 3/00, G02F 1/35, H04B 10/12

(21) Anmeldenummer: **93105651.9**

(22) Anmeldetag: **06.04.1993**

(54) **Optisches Nachrichtenübertragungssystem mit einem Leistungsbegrenzer für Impulse hoher Energie**

Optical data transmission system with a power limiter for high energy pulses

Système optique de transmission de données avec un limitateur de puissance des impulsions à haute énergie

(84) Benannte Vertragsstaaten:
**BE CH DE DK ES FR GB IT LI NL SE**

(30) Priorität: **02.09.1992 DE 4229292**
**13.04.1992 FR 9204505**

(43) Veröffentlichungstag der Anmeldung:
**20.10.1993 Patentblatt 1993/42**

(73) Patentinhaber: **ALCATEL N.V.**
**NL-1077 XX Amsterdam (NL)**

(72) Erfinder:
• **Chesnoy, José**
**F-75014 Paris (FR)**
• **Pfeiffer, Thomas**
**W-7000 Stuttgart 80 (FR)**

(74) Vertreter: **Schmidt, Werner Karl, Dipl.-Phys. et al**
**D-70449 Stuttgart (DE)**

(56) Entgegenhaltungen:
GB-A- 2 219 126     US-A- 4 846 561
US-A- 4 973 125

• **PROCEEDINGS OF THE EUROPEAN CONFERENCE ON OPTICAL COMMUNICATION '91 Bd. 2, 9. September 1991, PARIS, FRANCE, Seiten 477 - 479 GNAUCK ET AL.**
• **OPTICAL ENGINEERING. Bd. 24, Nr. 4, Juli 1985, BELLINGHAM US Seiten 613 - 623 VAN STRYLAND ET AL. 'Two photon absorption, nonlinear refraction, and optical limiting in semiconductors'**
• **PATENT ABSTRACTS OF JAPAN vol. 13, no. 12 (P-812)12. Januar 1989 & JP-A-63 218 928 (NTT) 12. September 1988**
• **PHYSICAL REVIEW B Bd. 31, Nr. 11, Juni 1985, NEW YORK ,US Seiten 6935 - 6940 QUARLES**
• **APPLIED PHYSICS LETTERS. Bd. 53, Nr. 10, 5. September 1988, NEW YORK US Seiten 840 - 841 STEIER**
• **JAPANESE JOURNAL OF APPLIED PHYSICS. Bd. 30, Nr. 10B, 15. Oktober 1991, TOKYO JP Seiten L1805 - L1807 KUBECEK**

**Beschreibung**

Die Erfindung betrifft ein optisches Nachrichtenübertragungssystem mit einem optischen Verstärker. Solche Systeme sind hinreichend bekannt, beispielsweise aus B. Wedding, et al: "10 GBit/s To 260 000 Subscribers Using Optical Amplifier Distribution Network", Contribution for ICC/Supercom'92, Optical Communications 300 Level Session "Impact of Optical Amplifiers on Network Architectures."

In solchen optischen Nachrichtenübertragungssystemen, bei denen die Übertragungsstrecke eine Lichtwellenleiterstrecke ist, dienen optische Verstärker dazu, in den Lichtwellenleitern geführte optische Signale zu verstärken.

Im Ausführungsbeispiel wird als optischer Verstärker ein faseroptischer Verstärker gewählt. Einen faseroptischen Verstärker zeigt beispielsweise EP 0 457 349 A2.

In diesen faseroptischen Verstärkern werden durch ein von einer Pumplichtquelle emittiertes Pumplicht Erbium-Ionen, mit denen ein Lichtwellenleiterstück dotiert ist, von einem Grundzustand in einen angeregten Zustand überführt, von dem aus sie, entweder durch spontane oder stimulierte Emission, wieder in den Grundzustand übergehen. Die stimulierte Emission wird durch das durch das dotierte Lichtwellenleiterstück laufende zu verstärkende optische Signal angeregt. Die spontane Emission wird in dem dotierten Lichtwellenleiterstück ebenfalls verstärkt; diese verstärkte spontane Emission (engl.: amplified spontaneous emission, ASE) ist ursächlich für das in einem faseroptischen Verstärker auftretende Rauschen.

In den oben erwähnten Systemen besteht die Gefahr, daß bei einer Unterbrechung der Lichtwellenleiterstrecke, beispielsweise durch Faserbruch oder durch Auftrennen eines optischen Steckverbinders, Systemkomponenten, wie z.B. Photodioden, beschädigt werden.

Dies läßt sich wie folgt erklären:

Durch die Unterbrechung der Lichtwellenleiterstrecke sinkt die Eingangsleistung des optischen Verstärkers auf Null ab. Da der Pumpvorgang unabhängig von der Eingangsleistung ist, wird auch bei abgefallener Eingangsleistung in das dotierte Lichtwellenleiterstück ständig Energie gepumpt; es kommt zu einer Energiespeicherung. Durchläuft reflektiertes Licht, das von der spontanen Emission herrührt und an der Trennstelle der Unterbrechung der Lichtwellenleiterstrecke reflektiert wird, das dotierte Lichtwellenleiterstück, dessen laseraktive Substanz, das sind z.B. die Erbium Ionen, sich im angeregten Zustand befindet, wird die gespeicherte Energie schlagartig freigesetzt. Es kommt zur Emission von Impulsen hoher Energie, die eine Gefahr für Systemkomponenten darstellen.

Die Ausbreitung dieser Riesenimpulse erfolgt sowohl in Signalrichtung als auch entgegen der Signalrichtung. Die Wellenlänge der Riesenimpulse liegt bei faseroptischen Verstärkern, die mit Erbium dotiert sind, im Bereich zwischen 1520 nm und 1570 nm.

Diese faseroptischen Verstärker kommen nicht nur in den optischen Übertragungssystemen zum Einsatz. Sie kommen auch in Baugruppen oder provisorischen Aufbauten, die für die Inbetriebnahme solcher Systeme hergestellt werden, um Messungen, Tests oder einen Aufbau Schritt für Schritt zu ermöglichen, zum Einsatz. Reflektierende Flächen können gewollt oder ungewollt in diese Aufbauten eingefügt werden und dann zu einer Rückreflexion des vom Verstärker verstärkten Lichts führen. Derartige reflektierende Flächen werden insbesondere von einem Anschlußglied oder einem abgeschnittenen Ende eines Lichtwellenleiters gebildet.

Ein optischer Verstärker mit einem dotierten Lichtwellenleiterstück kann einen so hohen Verstärkungsgrad besitzen, daß er, wenn er beispielsweise ungewollt einer Rückreflexion unterliegt, sich durch ein im Englischen Q-Switching genanntes Auslösephänomen in einen Laseroszillator verwandelt. Auch dadurch werden Impulse hoher Energie erzeugt und es können Systemkomponenten beschädigt werden. Eine bekannte Lösung zur Vermeidung solcher Beschädigungen besteht darin, einen oder mehrere optische Isolatoren in den optischen Übertragungsweg einzubauen. Diese Isolatoren können Licht in nur einer Richtung übertragen, wodurch Rückreflexionen verhindert werden. Dadurch kann vermieden werden, daß der optische Verstärker als Laseroszillator arbeitet. Es handelt sich hier um die passiven Komponenten mit der höchsten Komplexität und damit dem höchsten Preis in einem System, bzw. einem optischen Verstärker mit Lichtwellenleiter.

Aus US-A- 4 973 125 ist bekannt, daß optische Leistungsbegrenzer (self-Limiter) zum Schutz optischer Komponenten verwendet werden. Diese Leistungsbegrenzer bestehen aus einem Silizium-Substrat mit aufgebrachten Wellenleiterstrukturen und haben einen Absorptionskoeffizienten, der mit zunehmender optischer Eingangsleistung zunimmt, d.h. hohe Transmission bei niedriger optischer Leistung und niedrige Transmission bei hoher optischer Leistung.

Es ist die Aufgabe der Erfindung, ein optisches Nachrichtenübertragungssystem mit optischen Verstärkern anzugeben, bei dem die Gefahr einer Beschädigung von Systemkomponenten durch Impulse hoher Energie auf eine andere Art vermieden wird.

Die Aufgabe wird wie in dem Patentanspruch 1 angegeben gelöst. Weiterbildungen ergeben sich aus den Unteransprüchen.

Die Erfindung wird nun anhand der Zeichnungen näher erläutert. Es zeigen:

Fig. 1    ein Ausführungsbeispiel eines optischen Nachrichtenübertragungssystems mit erfindungsgemäßem Leistungsbegrenzer,

Fig. 2    den Verlauf der Dämpfung eines Leistungsbegrenzers als Funktion seiner optischen Eingangsleistung,

Fig. 3 einen faseroptischen Verstärker mit einem Leistungsbegrenzer für ein optisches Nachrichtenübertragungssystem.

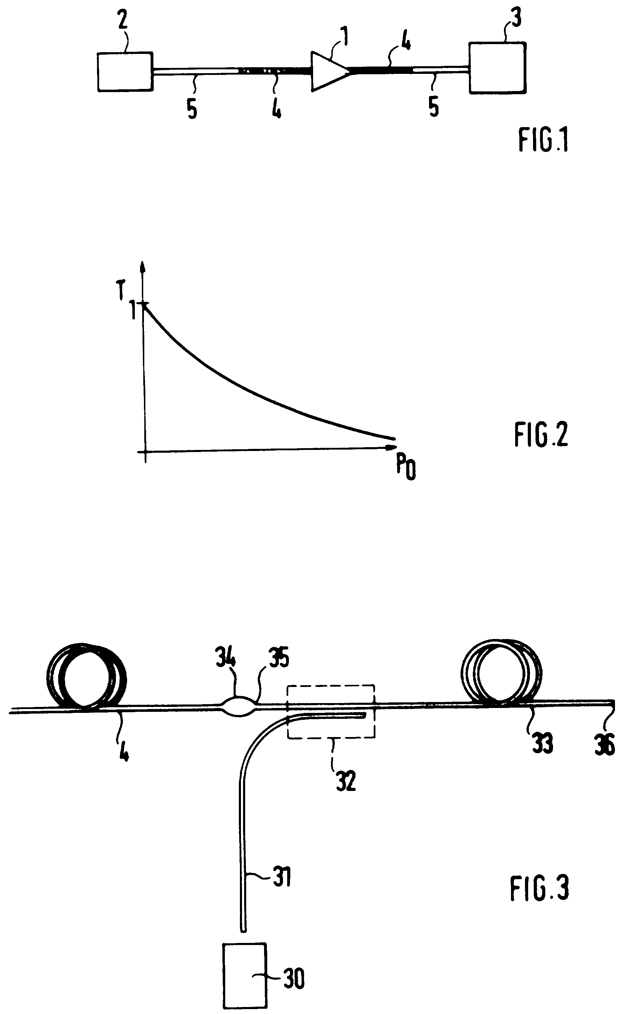

In Fig. 1 ist ein optisches Nachrichtenübertragungssystem mit einem Elektrisch-Optisch-Wandler 2 auf der Sendeseite und einem Optisch-Elektrisch-Wandler 3 auf der Empfangsseite, die über einen Lichtwellenleiter 5 miteinander verbunden sind, gezeigt. Es ist aber auch ein Nachrichtenübertragungssystem mit einem Elektrisch-Optisch-Wandler auf der Sendeseite und mehreren verteilten Optisch-Elektrisch-Wandlern auf der Empfangsseite möglich. Für die Erfindung ist dies jedoch nicht von Bedeutung.

Das in Fig. 1 gezeigte Nachrichtenübertragungssystem hat weiterhin einen faseroptischen Verstärker 1 und zwei Leistungsbegrenzer 4.

In diesem Ausführungsbeispiel ist, bezüglich der Ausbreitungsrichtung des optischen Signals, ein Leistungsbegrenzer 4 vor und einer nach dem faseroptischen Verstärker 1 angeordnet, und er ist als dotiertes Lichtwellenleiterstück ausgeführt. Die Verbindung der beiden Leistungsbegrenzer mit dem faseroptischen Verstärker 1 und dem Lichtwellenleiter 5 erfolgt dabei mit Hilfe der bekannten Spleiß-Technik.

Der Leistungsbegrenzer kann auch anders ausgeführt sein, z.B. als ein Plättchen aus einem Absorbermaterial, das an einer Unterbrechungssstelle des Lichtwellenleiters 5, z.B. vor und nach dem optischen Verstärker, eingefügt wird.

Dieses Absorbermaterial hat Eigenschaften, die noch beschrieben werden.

Es ist auch möglich, einen Leistungsbegrenzer nach dem Elektrisch-Optisch-Wandler 2 und einen vor dem Optisch-Elektrisch-Wandler 3 anzuordnen. Damit werden diese Systemkomponenten vor den Auswirkungen der Riesenimpulse geschützt.

Im praktischen Einsatz werden faseroptische Verstärker auch kaskadiert angeordnet. In diesem Fall können die Leistungsbegrenzer so angeordnet werden, daß sich in den Verbindungsstrecken zwischen den einzelnen faseroptischen Verstärkern jeweils ein Leistungsbegrenzer befindet.

Der Leistungsbegrenzer hat folgende Eigenschaften.

Der Leistungsbegrenzer läßt das optische Signal mit einer normalen optischen Leistung (einige 10 mW) und einer Wellenlänge von z.B. $\lambda = 1550$ nm nahezu ungedämpft durch. Optische Leistungen, die der des Riesenimpulses entsprechen (Watt Bereich) dämpft er dagegen stark.

Dieser Sachverhalt ist in Fig. 2 dargestellt. Das Leistungsverhältnis

$$T = \frac{P(L)}{P_0}$$

ist als Funktion der optischen Eingangsleistung $P_0$ des Leistungsbegrenzers dargestellt. P(L) ist die optische Ausgangsleistung eines Leistungsbegrenzers mit der Länge L.

Vorzugsweise ist die Abhängigkeit der Dämpfung im Leistungsbegrenzer, wie in Fig. 2 gezeigt, nichtlinear, damit optische Strahlung mit hoher Leistung überproportional gedämpft wird.

Diese Dämpfung in dem Leistungsbegrenzer kann durch Lichtstreuung und/oder Absorption erfolgen. Vorzugsweise wird ein Leistungsbegrenzer aus einem Absorbermaterial, bei dem die Absorption eine Zwei-Photonen-Absorption ist, verwendet. Diese zeigt nämlich die besonders geeignete nichtlineare Abhängigkeit von der optischen Eingangsleistung. Diese Absorption ist beispielsweise in dem Buch "The Principles of Nonlinear Optics", Y.R. Shen, John Wiley & Sons, pp. 202-210 beschrieben, allerdings nicht in Zusammenhang mit einem bestimmten Material und nicht mit Lichtwellenleitern.

Die genannten Anforderung erfüllt z.B. ein dotiertes Lichtwellenleiterstück aus einem Absorbermaterial mit Zwei-Photonen-Absorption. Solch ein Absorbermaterial ist z.B. Neodym Nd oder Thulium Tm.

Durch die Wahl des Dotierelements und durch die Dotierung eines Lichtwellenleiters wird erreicht, daß eine Zwei-Photonen-Absorption stattfindet. Das Dämpfungsvermögen des Leistungsbegrenzers ist durch die Länge des dotierten Lichtwellenleiterstücks bestimmt.

Der in Fig. 3 als Beispiel angegebene faseroptische Verstärker hat die nachfolgenden Elemente, deren Funktion aus der bereits angegebenen Literatur bekannt sind:

- Ein dotiertes Lichtwellenleiterstück 33, das z.B. mit Erbium-Ionen dotiert ist und in der Lage ist, eine von einer Pumplichtquelle gelieferte Anregungsenergie zu akkumulieren. Das Lichtwellenleiterstück besitzt zwei Enden 35, 36.

- Eine Pumplichtquelle 30, die ein Pumplicht aussendet.

- Pumplichtkopplungsmittel. Diese Mittel bestehen aus einer Pumplichtkopplungsfaser 31 und einem Koppler 32. Ihre Aufgabe ist es, das Pumplicht in das dotierte Lichtwellenleiterstück 33 einzuspeisen.

- Ein Leistungsbegrenzer 4, der hier in Form eines Lichtwellenleiterstücks gezeigt ist, besteht aus einem Kern, der mit einem halbleitenden absorbierenden Material enthält, das in Form von Mirkokristalliten in der Masse des Faserkerns verteilt ist. Dieses Material wird so gewählt, daß es einen Absorptionskoeffizienten besitzt, der mit zunehmender optischer Eingangleistung zunimmt. Die Absorption erfolgt durch Zwei-Photonen-Absorption.

Vorzugsweise ist das absorbierende Material ein Halbleiter des Typs II-VI und insbesondere Kadmiumtellurid CdTe.

Der Leistungsbegrenzer ist vorzugsweise in Reihe mit dem dotierten Lichtwellenleiterstück 33 durch eine Spleißstelle 34 verbunden.

Wenn das Dotierungsmaterial ionisiertes Erbium Er$^{+++}$ ist, dann besitzt das absorbierende Halbleitermaterial einen Bandabstand entsprechend einer Wellenlänge zwischen 750 nm und 1550 nm.

Mit Halbleiter-Mikrokristalliten dotierte Gläser sind im Hinblick auf ihre Zwei-Photonen-Absorption untersucht worden: Koeffizienten von 0,2 cm/GW wurden gemessen von F. Canto, E. Miesak et al (CLE0'88, Poster WM41) für den Fall, daß die Absorption in Längsrichtung vernachlässigbar ist (die Energie des Photons ist geringer als der Bandabstand). Diese Ergebnisse können auf Lichtwellenleiter übertragen werden.

Soll mit einem solchen Koeffizienten (0,2 cm/GW) gewährleistet sein, daß in einem optischen Nachrichtenübertragungssystem eine Leistung von 5 W (10 MW/cm$^2$) nicht überschritten wird, dann muß, bei einem zu induzierenden Verlust von 30 dB, ein Leistungsbegrenzer, der als Lichtwellenleiter ausgeführt ist, eine Länge von 30 m haben. Der entsprechende Verlust beträgt dann bei einer Leistung von 50 mW 0,3 dB.

**Patentansprüche**

1. Nachrichtenübertragungssystem zum Übertragen eines optischen Signals über einen Lichtwellenleiter (5) mit mindestens einem faseroptischen Verstärker (1), einem Elektrisch-Optisch-Wandler (2) auf der Sendeseite, mindestens einem Optisch-Elektrisch-Wandler (3) auf der Empfangsseite, und einem im optischen Übertragungsweg vorhandenen Leistungsbegrenzer (4), dessen Absorptionskoeffizient mit zunehmender optischer Eingangsleistung zunimmt,
**dadurch gekennzeichnet,**
daß der Leistungsbegrenzer (4) ein dotiertes Faser-Lichtwellenleiterstück mit einem Absorbermaterial ist, bei dem die Absorption eine Zwei-Photonen Absorption ist.

2. Faseroptischer Verstärker für ein Nachrichtenübertragungssystem, dadurch gekennzeichnet, daß er ein baulich mit ihm vereinigtes dotiertes Faser-Lichtwellenleiterstück als Leistungsbegrenzer (4) hat, dessen Absorptionskoeffizient mit zunehmender optischer Eingangsleistung zunimmt.

3. Nachrichtenübertragungssystem nach Anspruch 1 oder optischer Verstärker nach Anspruch 2, dadurch gekennzeichnet, daß das Lichtwellenleiterstück mit Neodym Nd dotiert ist.

4. Nachrichtenübertragungssystem nach Anspruch 1 oder optischer Verstärker nach Anspruch 2, dadurch gekennzeichnet, daß das Lichtwellenleiterstück mit Thulium Tm dotiert ist.

5. Nachrichtenübertragungssystem nach Anspruch 1 oder optischer Verstärker nach Anspruch 2, dadurch gekennzeichnet, daß in dem dotierten Lichtwellenleiterstück ein lichtabsorbierendes und halbleitendes Material in Form von Mikrokristalliten verteilt ist, bei dem die Absorption eine Zwei-Photonen Absorption ist.

6. Nachrichtenübertragungssystem oder optischer Verstärker nach Anspruch 4, dadurch gekennzeichnet, daß das absorbierende Material ein Halbleitermaterial des Typs II-VI ist.

7. Nachrichtenübertragungssystem oder optischer Verstärker nach Anspruch 5, dadurch gekennzeichnet, daß das absorbierende Material Kadmiumtellurid CdTe ist.

8. Nachrichtenübertragungssystem oder optischer Verstärker nach Anspruch 6, dadurch gekennzeichnet, daß das lichtabsorbierende und halbleitende Material einen Bandabstand entsprechend einer Wellenlänge, die zwischen 750 nm und 1550 nm liegt, besitzt.

**Claims**

1. A communication system for transmitting an optical signal over an optical waveguide (5), comprising at least one fiber-optic amplifier (1), an electrical-to-optical transducer (2) at the transmitting end, at least one optical-to-electrical transducer (3) at the receiving end, and a power limiter (4) in the optical transmission path whose absorption coefficient increases with increasing optical input power, **characterized in** that the power limiter (4) is a section of doped, optical fiber waveguide with an absorbing material wherein the absorption is a two-photon process.

2. A fiber-optic amplifier for a communication system, characterized in that it incorporates a section of doped optical fiber waveguide as a power limiter (4) whose absorption coefficient increases with increasing optical input power.

3. A communication system as claimed in claim 1 or a fiber-optic amplifier as claimed in claim 2, characterized in that the section of optical fiber waveguide is doped with neodymium, Nd.

4. A communication system as claimed in claim 1 or a fiber-optic amplifier as claimed in claim 2, characterized in that the section of optical fiber waveguide is doped with thulium, Tm.

5. A communication system as claimed in claim 1 or a fiber-optic amplifier as claimed in claim 2, characterized in that in the section of optical fiber waveguide, a light-absorbing and semiconducting material is distributed in the form of microcrystallites wherein the absorption is a two-photon process.

6. A communication system or a fiber-optic amplifier as claimed in claim 4, characterized in that the absorbing material is a semiconductor material of the type II-VI.

7. A communication system or a fiber-optic amplifier as claimed in claim 5, characterized in that the absorbing material is cadmium telluride, CdTe.

8. A communication system or a fiber-optic amplifier as claimed in claim 5, characterized in that the light-absorbing and semiconducting material has a band gap corresponding to a wavelength between 750 nm and 1550 nm.

## Revendications

1. Système de transmission de l'information pour transmettre un signal optique par l'intermédiaire d'un guide d'ondes lumineuses (5), comportant au moins un amplificateur à fibre optique (1), un convertisseur électro-optique (2) du côté d'émission, au moins un convertisseur opto-électrique (3) du côté réception, et un limiteur de puissance (4) qui est installé sur le chemin optique de transmission et dont le coefficient d'absorption croît lorsque la puissance optique d'entrée croît,
caractérisé
par le fait que le limiteur de puissance (4) est un élément de guide d'ondes lumineuses à fibre optique dopé comportant un matériau absorbant dans le cas duquel l'absorption est une absorption à deux photons.

2. Amplificateur à fibre optique pour un système de transmission de l'information caractérisé par le fait qu'il comporte comme limiteur de puissance (4) un élément de guide d'ondes lumineuses à fibre optique, dopé, qui lui est réuni par construction et dont le coefficient d'absorption croît lorsque la puissance optique d'entrée croît.

3. Système de transmission de l'information selon la revendication 1, ou amplificateur optique selon la revendication 2,
caractérisé par le fait que l'élément de guide d'ondes lumineuses est dopé au néodyme Nd.

4. Système de transmission de l'information selon la revendication 1 ou amplificateur optique selon la revendication 2,
caractérisé par le fait que l'élément de guide d'ondes lumineuses est dopé au thulium Tm.

5. Système de transmission de l'information selon la revendication 1 ou amplificateur optique selon la revendication 2,
caractérisé par le fait que dans l'élément de guide d'ondes lumineuses, dopé, est réparti un élément absorbant la lumière et semiconducteur, sous forme de microcristallites, dans le cas duquel l'absorption est une absorption à deux photons.

6. Système de transmission de l'information ou amplificateur optique selon la revendication 4,
caractérisé par le fait que le matériau absorbant est un matériau semiconducteur du type II-VI.

7. Système de transmission de l'information ou amplificateur optique selon la revendication 5,
caractérisé par le fait que le matériau absorbant est le tellurure de cadmium CdTe.

8. Système de transmission de l'information ou amplificateur optique selon la revendication 6, caractérisé par le fait que le matériau absorbant la lumière et semiconducteur possède une bande interdite correspondant à une longueur d'onde qui se situe entre 750 nm et 1550 nm.

FIG.1

FIG.2

FIG.3